(19) Europäisches Patentamt
European Patent Office
Office européen des brevets

(11) Publication number : **0 500 376 A2**

(12) **EUROPEAN PATENT APPLICATION**

(21) Application number : **92301422.9**

(22) Date of filing : **20.02.92**

(51) Int. Cl.$^5$ : **B32B 15/08,** F16F 9/30

(30) Priority : **21.02.91 JP 27419/91**
**27.08.91 JP 215363/91**
**28.08.91 JP 217076/91**

(43) Date of publication of application :
**26.08.92 Bulletin 92/35**

(84) Designated Contracting States :
**DE FR GB IT SE**

(71) Applicant : **KAWASAKI STEEL CORPORATION**
**No. 1-28, 1-Chome Kitahonmachi-Dori**
**Chuo-Ku, Kobe-Shi Hyogo 651 (JP)**

(72) Inventor : **Eguchi, Kunihiko, c/o Technical Research Div.**
**Kawasaki Steel Corporation, 1, Kawasaki-cho**
**Chiba-shi, Chiba (JP)**
Inventor : **Uchida, Yasunobu, c/o Technical Research Div.**
**Kawasaki Steel Corporation, 1, Kawasaki-cho**
**Chiba-shi, Chiba (JP)**
Inventor : **Sakamoto, Seiji, c/o Technical Research Div.**
**Kawasaki Steel Corporation, 1, Kawasaki-cho**
**Chiba-shi, Chiba (JP)**
Inventor : **Ono, Tomoshige, c/o Technical Research Div.**
**Kawasaki Steel Corporation, 1, Kawasaki-cho**
**Chiba-shi, Chiba (JP)**
Inventor : **Suginobe, Hidetaka, c/o Technical Research Div.**
**Kawasaki Steel Corporation, 1, Kawasaki-cho**
**Chiba-shi, Chiba (JP)**

(74) Representative : **Overbury, Richard Douglas et al**
**Haseltine Lake & Co Hazlitt House 28, Southampton Buildings Chancery Lane**
**London WC2A 1AT (GB)**

(54) **Process for producing composite vibration-damping materials.**

(57) composite vibration-damping materials having a resin layer sandwiched between two metal sheets can be produced by reacting prepolymers with low-molecular weight compounds having functional groups capable of reacting with the functional groups in said prepolymers to form covalent bonds and handling the resulting crosslinked resin in such a way that it is sandwiched between the two metal sheets. In accordance with the first embodiment of the invention, two low-molecular weight compounds having different numbers of functional groups per molecule are used ; in accordance with the second embodiment, two prepolymers having different numbers of functional groups per molecular chain are used ; and in accordance with the third embodiment, a mixture of a first prepolymer and a low-molecular weight compound is coated on at least one surface of two metal sheets and then a second prepolymer is dusted over the coated surface nonuniformly, followed by compressing the two metal sheets together. The thus produced composite vibration-damping materials not only exhibit satisfactory damping performance over a broad temperature range but also develop high adhesive force between the resin and metal sheets at both ordinary and elevated temperatures. In addition, good spot weldability can be imparted to the damping materials by incorporation of an electroconductive filler.

FIG. 1

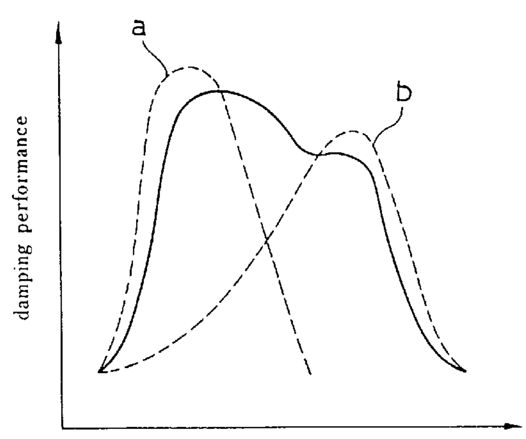


EP 0 500 376 A2

## BACKGROND OF THE INVENTION

### Field of the Invention

This invention mainly relates to a process for producing composite vibration-damping materials.

### Prior Art

Among the materials having a capability for damping vibrations, composite vibration-damping materials with a resin sandwiched between two metal sheets are drawing researcher's attention as effective materials for controlling noise and vibrations. The energy of vibration as applied to either metal sheet of the damping material is converted by the intermediate resin layer to thermal energy and such composite vibration-damping materials are being used or reviewed for use in various applications including an automobile's oil pan, stair-steps, doors, building materials such as flooring and roofing, and covers on motors and compressors. One of the most important characteristics that are required for such composite vibration-damping materials is that they exhibit effective vibration-damping capabilities over a broad temperature range.

When a given object is vibrated, it will respond with maximum amplitude at a certain frequency (fr), which is generally referred to as "resonant frequency". If the amplitude at the resonant frequency is written as Ao, the vibrational energy decreases to one half at the frequency where the amplitude is , $Ao/\sqrt{2}$ (or where the relative power level is -3dB). If this frequency band (half-width or 3-dB width) is written as $\Delta f$, the loss factor $\eta$ is expressed by the formula:

$$\eta = \Delta f/fr$$

The vibration-damping capability of a certain damping material can be evaluated by its loss factor $\eta$.

Another requirement to be satisfied by effective composite vibration-damping materials is high performance of adhesion between the intermediate resin layer and each metal sheet. Stated more specifically, they should have an adhesive strength at ordinary temperatures that is sufficient to withstand the shear force to be exerted by press molding; at the same time, the high adhesive strength should be maintained even after the painting operation which is performed at temperatures as high as 200°C; also required is high adhesive strength over the working temperature range.

The use of composite vibration-damping materials will further expand if they can be spot welded.

Materials that have heretofore been reviewed for use as the resin in the intermediate layer include polyurethanes, polyesters, polyamides, polyisobutylene, ethylene/α-olefin copolymer, ethylene/vinyl acetate copolymer resin, crosslinked polyolefins and polyvinyl acetal. Also under review are asphalt, synthetic rubbers, acrylic tackifiers, epoxy resins, etc.

Composite vibration-damping materials available today that use the above-listed high molecular substances in the intermediate layer are still incapable of meeting both requirements for high damping and bonding capabilities. For example, Japanese Patent Publication (kokai) No.48321/1988 discloses a resin for use as a vibration-damping material that is produced by reacting a diisoccyanate compound with a mixture that contains in specified proportions a polyester diol with a molecular weight of 600-6,000 that is composed of a dicarboxylic acid component (at least 60% of which is occupied by an aromatic dicarboxylic acid component) and a glycol component and a polyester diol with a molecular weight of 600-6,000 that is composed of an aliphatic dicarboxylic acid and an aliphatic glycol. Said publication states that a vibration-damping material using said resin in the intermediate layer has high damping and bonding capabilities, as well as good moldability by pressing. However, in order to use damping materials in a hot atmosphere, they must have better adhesive properties at high temperatures and, in addition, an improvement must be made in such a way that the desired vibration-damping performance is exhibited over a broader temperature range.

The specification of Japanese Patent Publication (kokai) No.48321/1988, supra, states that 2,4,4′-triisocyanatodiphenyl and benzenetriisocyanate may optionally be used in small amounts together with the diisocyanate component. However, the purpose of using those triisocyanate components is not mentioned at all in that patent. Nor does it have any reference to spot weldability.

The specification of Japanese Patent Publication No.48813/1989 teaches a resin for use with vibration-damping steel plates that is prepared by reacting a saturated copolyester having a weight average molecular weight of at least 5,000 and a softening point of 50 - 150°C with an isocyanate compound having at least two isocyanato groups. The specification states that the vibration-damping steel plate using this resin in the intermediate layer has not only good damping performance over the temperature range of 0 - 50°C but that it also excels in the bonding performance necessary to withstand press molding, as well as high stability of adhesion at elevated temperatures. The present inventors conducted a follow-up experiment to verify the superior charac-

teristics of that steel plate. However, there still is a room for improvement that permits the steel plate to exhibit the intended vibration damping performance over an even broader temperature range.

The specification of Japanese Patent Publication (kokai) No. 48813/1989, supra, fails to make reference to spot weldability.

## SUMMARY OF THE INVENTION

A first object, therefore, of the present invention is to provide process for producing a composite vibration-damping material that exhibits effective vibration damping performance over a broad temperature range, that has sufficient adhesive strength at ordinary temperatures to withstand the shear force to be exerted by press molding, and that effectively retains the developed adhesive strength even after the painting operation conducted at elevated temperatures, thereby insuring high adhesive strength in the working temperature range.

A second object of the present invention is to provide a process for producing a composite vibration-damping material that has good spot weldability in addition to the superior characteristics described above.

The first object of the present invention can be attained by either one of the following three general embodiments.

According to the first general embodiment of the present invention, there is provided a process for producing a composite vibration-damping material having a resin layer sandwiched between two metal sheets, which process comprises handling a resin in such a way that it is sandwiched between the two metal sheets, said resin being obtained by reacting a prepolymer, a low-molecular weight compound (A) and another low-molecular weight compound (B) under such a condition that the low-molecular weight compound (A) is present in an amount of 15 - 85 wt% of the sum of the low-molecular weight compounds (A) and (B), said prepolymer having an average of at least two functional groups (X) per molecular chain, said low-molecular weight compound (A) having an average of at least two functional groups (Y) per molecule that are capable of reacting with the functional groups (X) to form covalent bonds, said low-molecular weight compound (B) having functional groups (Y′) that are capable of reacting with the functional groups (X) to form covalent bonds and whose number per molecule is greater than that of the functional groups (Y) in the low-molecular weight compound (A).

According to the second general embodiment of the present invention, there is provided a process for producing a composite vibration-damping material having a resin layer sandwiched between two metal sheets, which process comprises handling a resin in such a way that it is sandwiched between the two metal sheets, said resin being obtained by reacting a prepolymer (C), a prepolymer (D) and a low-molecular weight compound under such a condition that the prepolymer (C) is present in an amount of 10 - 90wt% of the sum of the prepolymers (C) and (D), said prepolymer (C) having an average of at least two functional groups (X) per molecular chain, said prepolymer (D) containing functional groups (X′) whose number per molecule is greater than that of the functional groups (X) in the prepolymer (C), said low-molecular weight compound having an average of at least two functional groups (Y) per molecule that are capable of reacting with the functional groups (X) and (X′) to form covalent bonds.

According to the third general embodiment of the present invention, there is provided a process for producing a composite vibration-damping material having a resin layer sandwiched between two metal sheets, which process comprises mixing a first prepolymer having an average of at least two functional groups(X) per molecular chain with a low-molecular weight compound having an average of at least two functional groups (Y) per molecule that are capable of reacting with the functional groups (X) to form covalent bonds, coating the resulting mixture on at least one surface of the two metal sheets, dusting said coated surface with a second prepolymer having at least two functional groups (X′) per molecular chain that are capable of reacting with the functional groups (Y) to form covalent bonds, and compressing the two metal sheets together in such a way that they sandwich the coated surface.

The second object of the present invention can be attained by incorporating an electroconductive material in the resin according to each oi the first to the third general embodiments described above.

## BRIEF DESCRIPTION OF THE DRAWINGS

Fig. 1 is a diagram showing schematically the speculated mechanism by which the composite vibration-damping materials produced by the processes of the present invention exhibit excellent vibration damping performance; and

Fig. 2 is a graph showing the relationship between the content of an isocyanate compound having at least three isocyanato groups per molecule, shear adhesive strength and spot weldability.

DETAILED DECRIPTION OF THE INVENTION

More preferred embodiments of the present invention and the advantages derived therefrom will become apparent by themselves as the present invention is described below in detail.

The first embodiment of the invention

Metal sheet

The metal sheets that can be used in producing the vibration-damping material of the present invention are not limited in any particular way and they may be exemplified by cold-rolled steel sheets, surface-treated steel sheets such as chromated steel sheets, zinc or zinc-base metal plated steel sheets and phosphated steel sheets, as well as copper sheets, aluminum sheets, stainless steel sheets and titanium sheets. These metal sheets may be in the form of a coiled strip or a cut sheet. The thickness of the metal sheets also is not limited to any particular values but considering such factors as adaptability for shaping processes and the shape-retaining property, their thickness is preferably in the range of ca. 0.2 - 2 mm.

Prepolymer

In the first embodiment of the invention, a prepolymer having an average of at least two functional groups (X) per molecular chain is used as one of the starting materials for preparing the resin that is to form the intermediate layer of the composite vibration-damping material. In consideration of the desired vibration-damping performance and the ease of coating on the metal sheets, the number average molecular weight of the prepolymer is preferably in the range of 7,000 - 50,000, more preferably in the range of 10,000 - 30,000.

Preferred examples of the functional group(X) include a hydroxyl group, an epoxy group, an amino group, carboxyl group, an isocyanato group, an acid anhydride group, etc.

The prepolymer may specifically be exemplified by polyesters having hydroxyl or carboxyl groups, glycidyl ethers of polyols, glycidyl esters of polyesters having carboxyl groups, polyamides having amino or carboxyl groups, and modified polyolefins having hydroxyl, carboxyl or acid anhydride groups.

The prepolymer contains averagely at least two, preferably 2 - 4, functional groups (X) per molecular chain.

The prepolymers described above are known per se and they are commercially available or can be readily produced by one skilled in the art in accordance with known processes.

The prepolymer is described below in detail with particular reference to the case where it is a polyester. The carboxylic acid component of the polyester may be exemplified by aromatic dibasic acids such as terephthalic acid, isophthalic acid and phthalic acid, aliphatic dibasic acids such as succinic acid, glutaric acid, adipic acid, β-methyladipic acid, pimelic acid, 1, 6-hexanedicarboxylic acid, azelaic acid, sebacic acid, nonanedicarboxylic acid, decanedicarboxylic acid and hexadecanedicarboxylic acid, unsaturated aliphatic acids such as maleic acid and dimer acid, and aromatic polybasic acids such as trimellitic acid. The alcohol component may be exemplified by glycol such as ethylene glycol, 1,2-propanediol, 1,3-propanediol, 1,3-butanediol, 1,4-butanediol, 1,2-pentanediol, 1,5-pentanediol, 3-methypentanediol, 1,3-hexanediol, 1,6-hexanediol, neopentyl glycol, 1,4-cyclohexanediol, hydrogenated bisphenol A, diethylene glycol, triethylene glycol, polyethylene glycol, dipropylene glycol, polypropylene glycol and polytetramethylene glycol, and polyhydric alcohols such as trimethylolpropane and pentaerythritol.

Needless to say, the polyester may be synthesized by esterification through direct reaction between the above-listed carboxylic acids and alcohols in accordance with common sense to one skilled in the art. Alternatively, the carboxylic acids may be converted to corresponding esters or acid halides before reaction with the alcohols.

Saturated polyesters as the preferred pepolymer include such a saturated polyester that 30 - 90 mol% of the acid component is accounted for by a terephthalic acid component, with the remainder being an aliphatic dibasic acid, particularly adipic acid or sebacic acid. A particularly preferred saturated polyester is such that 30 - 80 mol% of the glycol component is accounted for by ethylene glycol, with the remainder being a glycol having 6 carbon atoms or a polyoxyalkylene glycol such as polyethylene glycol or polytetramethylene glycol. With such polyesters being used as the prepolymer, composite vibration-damping materials can be produced that excel in adhesive properties and damping performance.

Such polyesters may be synthesized by the following procedure: a dibasic acid and glycol as the principal starting materials are heated at 150 - 220°C at atmospheric pressure in the presence of a catalyst mainly composed of a metal salt so that an oligoester forms by an estrification and, subsequently, the reaction mixture is heated at 200 - 270°C and at either atmospheric or subatmospheric pressure to distill off a suitable amount of

glycol, whereby a hydroxyl group containing polyester having a desired molecular weight is obtained.

When synthesizing the polyesters, glycol is preferably added in an amount of 1.5 - 2.0 times as much as the amount in the intended polyester composition. The polymerization catalyst is selected as appropriate from the group of common catalysts made of such metal salts as tetra-n-butoxytitanium, zinc acetate, antimony trioxide and potassium oxalatotitanate.

If a dicarboxylic acid and a diol are used as the starting compounds, an essentially linear polyester is produced. Since this polyester is terminated with a hydroxyl group or a carboxyl group, it usually contains two functional groups (X) per molecular chain. In order to increase the number of functional groups (X), a trihydric or higher polyhydric alcohol as the alcohol component or tricaboxylic or higher polycarboxylic acid is added at the stage of polyester synthesis in a small amount that is insufficient for the progress of gellation. This method is known per se.

Other prepolymers that can be used in the present invention are illustrated below specifically.

Exemplary glycidyl ethers include: diglycidil ethers of the glycols illustrated hereinabove as one of the starting materials for polyesters and diglycidyl ethers of polyglycols of the above glycols.

Exemplary glycidyl esters include: diglycidyl polyesters or polyglycidyl polyesters which are derived from the aforementioned polyesters through glycidylating the molecular end thereof.

Exemplary polyamides include: nylon 6, nylon 66, nylon 8, and polyamide resins synthesized from a lactam such as caprolactam or laurolactam and an aminocarboxylic acid such as aminoundecanoic acid or aminododecanoic acid; and polyamides synthesized from an organic diamine such as hexamethylenediamine or octamethylenediamine and an aromatic or aliphatic dibasic acid that are illustrated hereinabove as one of the starting materials for polyesters. These examples are essentially linear and their polymer chain is terminated with a carboxyl or amino group. In this case, the number of functional groups(X) per molecular chain is usually two. The number of functional groups can be easily adjusted by adding a triamine or a tricarboxylic acid or higher polycarboxylic acid at the stage of synthesis in a small amount that is insufficient for the progress of gellation. This method is also known per se.

Exemplary modified polyolefins include: a maleic anhydride graft modified ethylene-propylene copolymer, a maleic andydride graft modified ethylene-vinyl acetate copolymer, a maleic anhydride graft modified ethylene-ethyl acrylate copolymer, a maleic anhydride graft modified polyethylene, a maleic anhydride graft modified polypropylene and an ethylene-methacrylic acid copolymer. By appropriately controlling the amount of addition of maleic anhydride onto polyolefins, the number of acid anhydride groups per molecular chain can be adjusted.

It is also preferred to use such prepolymers that the loss tangent (tan $\delta$) due to glass translation within the frequency range of 0.1 - 20,000 Hz shows a maximum value of at least 0.5. The higher the value of tan$\delta$, the more effective the prepolymers will be in imparting the vibration-damping capability. A particularly preferred value of tangent is at least 0.7.

Low-molecular weight compounds (A) and (B)

The other starting materials that are used in preparing the resin for the intermediate layer oi the composite vibration-damping material according to the first embodiment of the present invention are the low-molecular weight compound (A) which has a average of at least two, preferably 2 - 2.5, functional groups (Y) per molecule that are capable of reacting with the functional groups (X) in the above-described prepolymer to form covalent bonds, and the low-molecular weight compound (B) which has functional groups (Y′) that are capable of reacting with the functional groups (X) to form covalent bonds and whose number per molecule is greater than that of the functional groups (Y) in the low-molecular weight compound (A). The low-molecular weight compound (B) preferably contains averagely at least three, more preferably 3 - 9, functional groups (Y′) per molecule.

The functional group (Y) may be the same or different from the functional group (Y′), however, they are preferably the same from the viewpoint of ease in controlling the reaction.

The functional groups (Y) and (Y′) will react with the functional group (X) to form covalent bonds, so they are variable with the kind of the functional group (X). Specific combinations of the three functional groups are exemplified below.

| Functional group (X) | | Functional groups (Y) and (Y') |
|---|---|---|
| (1) | hydroxyl group | isocyanato group |
| | | acid anhydride group |
| (2) | amino group | isocyanato group |
| | | acid anhydride group |
| | | epoxy group |
| (3) | carboxyl group | epoxy group |
| (4) | acid anhydride group | hydroxyl group |
| | | amino group |
| | | epoxy group |
| (5) | epoxy group | amino group |
| | | acid anhydride group |
| | | carboxyl group |
| (6) | isocyanato group | hydroxyl group |
| | | amino group |

The low-molecular weight compounds (A) and (B) have molecular weights of up to about 5,000 and may specifically be exemplified by the following.

(i) Isocyanato group containing low-molecular weight compounds

Exemplary isocyanato group containing low-molecular weight compounds include: 2,4-tolylenediisocyanate, 2,6-tolylenediisocyanate (commonly referred tc as "TDI"), methylene-bis-4-phenylisocyanate (commonly referred to as "MDI"), polymethylene polyphenylpolyisocyanate or MDI derivatives such as polyol modified MDI, e.g., Collonate 1040 and Collonate 1050 (commercially available from Nippon Polyurethane Industry Co., Ltd.) or carbodimide modified MDI, e.g. Millionate MTL and Millionate MTL-C (commercially available from Nippon Polyurethane Industry Co., Ltd.), hexamethylene diisocyanate (commonly referred to as "HDI") and derivatives thereof, isophorone diisocyanate (commonly referred to as "IPDI") and derivatives thereof, TDI adduct polyisocyanate having TDI added to trimethylolpropane, etc. such as Collonate L, HL (commercially available from Nippon Polyurethane Industry Co., Ltd.), Desmophene L and Desmodure N (commercially available from Sumitomo-Bayer Urethane Co., Ltd.), polymerized polyisocyanates that have been subjected to preliminary reaction, e.g. Sprasec 3240, Sprasec 3250, Collonate 2030, Collonate 2031 (commercially available from Nippon Polyurethane Industry Co., Ltd.), Desmodure IL and Desmodure HL (commercially available from Sumitomo-Bayer Urethane Co., Ltd.), blocked isocyanates having the isocyanate masked with caprolactam, etc., and isocyanate terminated prepolymers having a polyether of low molecular weight reacted preliminarily with one of the aforementioned polyisocyanates.

In the above list, the blocked isocyanates having the isocyanate masked with caprolactam, etc. are mentioned as isocyanato group containing compounds since they generate an isocyanate upon heating.

(ii) Epoxy group containing low-molecular weight compounds

Exemplary epoxy group containing low-molecular weight compounds include: epoxy compounds of bisphenol A type, bromated bisphenol A type and bisphenol F type, e.g. TD-127, YD-7128, YDF-165 and YDB-40CEK60 (commercially available from Toto Kasei K.K.) and EPICRON-830 (commercially available from

Dainippon Ink & Chemicals, Inc.); novolak type epoxy compounds such as epoxy compounds of o-cresol novolak type; polyglycidyl ethers such as sorbitol polyglycidyl ether, pentaerythritol polyglycidyl ether, glycerol polyglycidyl ether, ethylene glycol diglycidyl ether, polyethylene glycol diglycidyl ether, propylene glycol diglycidyl ether and polypropylene glycol diglycidyl ether; polyglycidylamines such as polyglycidylamine derived from tetrafunctional amines, e.g. YH-434 (commercially available from Toto Kasei K.K); glycidyl esters such as diglycidyl phthalate, diglycidyl hexahydrophthalate and diglycidylp-oxybenzoate; and alicyclic epoxy compounds, e.g. ERL-4234 (commercially available from Union Carbide Corporation).

These epoxy compounds preferably have an epoxy equivalent of no more than 250.

(iii) Acid anhydride group containing low-molecular weight compounds

Exemplary acid anhydride group containing low-molecular weight compounds include: aromatic acid anhydrides such as phthalic anhydride, trimellitic anhydride and pyromellitic anhydride; cycloaliphatic acid anhydrides such as maleic anhydride, succinic anhydride and tetrahydrophthalic anhydride; and aliphatic acid anhydrides such as polyadipic anhydride, polyazelaic anhydride and polysebacic anhydride.

(iv) Amino group containing low-molecular weight compounds

Exemplary amino group containing low-molecular weight compounds include: aliphatic polyamines such as diethylenetriamine and triethylenetetramine; cycloaliphatic polyamines such as menthenediamine and isophoronediamine; aliphatic-aromatic polyamines such as m-xylenediamine; and aromatic polyamines such as metaphenylenediamine, diaminodiphenylmethane and diaminodiphenylsulfone.

The low-molecular weight compound (A) or (B) which have functional groups (Y) or (Y′) are by no means limited to the examples listed above and it is easy for one skilled in the art to select appropriate compounds in accordance with the intended number of functional groups (Y) or (Y′) per molecule.

It sometimes occurs that by nature of their manufacturing process, the low-molecular weight compounds described above will unavoidably be a mixture of compounds containing different numbers of functional groups (Y) or (Y′) per molecule. If this is the case, the number of functional groups (Y) or (Y′) per molecule shall be taken as an average number.

The preferred combination of the prepolymer and the low-molecular weight compounds (A) and (B) is such that the prepolymer is a polyester having an average of two hydroxyl groups per molecular chain, that the low-molecular weight compound (A) is an isocyanate compound having an average of 2 - 2.5 isocyanato groups per molecule, and that the low-molecular weight compound (B) is an isocyanate compound having an average of 3 - 9 isocyanato groups per molecule.

The low-molecular weight compounds (A) and (B) are preferably used in such relative proportions to the prepolymer that the sum of the numbers of functional groups (Y) and (Y′) is 0.5 - 4.0 times as much as the numbers of functional groups (X). Most preferably, the low-molecular weight compounds (A) and (B) are used in such stoichiometric proportions to the prepolymer that the above-defined ratio is 1:1.

The relative proportions of the low-molecular weight compounds (A) and (B) to be used are such that the low-molecular weight compound (A) assumes 15 - 85 wt%, preferably 35 - 60wt%, of the sum of the two compounds.

It is very important for the purposes of the present invention to use the low-molecular weight compounds (A) and (B) having different numbers of functional groups per molecule. Meeting this condition will insure that the composite vibration-damping material exhibits satisfactory damping performance over a broad temperature range.

The objects of the present invention can be attained by using the low-molecular weight compounds (A) and (B) in the proportions specified above. If the low-molecular weight compound (A) is used alone, the composite vibration-damping material will have poor adhesive properties at elevated temperatures and it is not capable of exhibiting the intended damping performance over a broad temperature range. On the other hand, if the low-molecular weight compound (B) is used alone, the composite vibration-damping material will have superior bonding performance at elevated temperatures but it is poor in the damping performance over a broad temperature range. If the two compounds are used in combination, the adhesive properties at elevated temperatures are somewhat deteriorated compared to the case where the low-molecular weight compound (B) is used independently, but the composite vibration-damping material will exhibit superior damping performance over a broad temperature range. Hence, the overall rating of the resulting composite vibration-damping material is quite satisfactory and the scope of its application is expanded.

Electroconductive filler

The composite vibration-damping material of the present invention may incorporate an electroconductive filler in order to impart spot weldability. Exemplary conductive materials that can be used for this purpose include: metallic materials such as stainless steel, zinc, coper, tin, nickel and brass that are worked into powders, flakes, fibers, wires and other shapes; iron-base metals plated with coper, nickel, etc.; and conductive carbonaceous materials such as carbon black, graphite and carbon fibers. These conductive materials may be used either on their own or as admixtures. For good spot welding performance, metallic materials are preferably selected as conductive materials.

In order to insure that better conductivity is developed, the two metal sheets must be rendered current-carrying via the conductive material. Therefore, a typical length (L) of various conductive materials may be determined depending upon their shape: if they are in a powder form, its maximum particle size is L; with a flake, its maximum thickness is L; and with a filter or a wire, its maximum diameter is L. In order to develop better conductivity, the conductive material to be used is such that the ratio of (L) to the thickness (T) of the resin layer containing the conductive material is at least 0.5, preferably at least 0.8. If the L/T is within those ranges, current-carrying capacity is imparted and the composite vibration-damping material as produced will have good spot welding performance.

The conductive materials are preferably loaded in such an amount as to occupy 0.5 - 10 vol% of the resin. If their loading is within this range, a composite vibration-damping material is obtained that has a good balance between spot weldability and damping performance.

The balance between spot weldability and adhesive properties at elevated temperatures as attained when the conductive filler is incorporated in the resin layer of the composite vibration-damping material is closely related to the combined use of the aforementioned low-molecular weight compounds (A) and (B). If the low-molecular weight compound (B) is incorporated alone, spot weldability is deteriorated. If the low-molecular weight compounds (A) and (B) are used in combination, the adhesive properties at elevated temperatures are somewhat sacrified but, on the other hand, spot weldability is improved, providing a satisfactory composite vibration-damping material, as will be demonstrated by the working examples which are described later in this specification.

Procedures of the manufacture of composite vibration-damping material

Discussed below is a typical method by which a composite vibration-damping material having an intermediate resin layer is produced from the above-described prepolymer, low-molecular weight compounds (A) and (B), and conductive filler.

The prepolymer and the low-molecular weight compounds to be used in the present invention are dissolved in a solvent, followed by mixing with the conductive filler and any other additives such as a stabilizer that may be added as required

The solvent may be selected as appropriate in accordance with the prepolymer and the low-molecular weight compounds used. Exemplary useful solvents include toluene, methyl ethyl ketone, acetone, xylene, chloroform, methyl isobutyl ketone and ethyl acetate.

The resulting mixture is applied to the surface of one of the two metal sheets to be superposed by a suitable means such as roller coaters, sprays, curtain flow coaters or doctor knife coaters, and the solvent is removed by holding at room temperature, preferably by heating to a temperature of 100 - 200°C. Immediately after the removal of the solvent or after standing for a certain period, the two metal sheets are brought into intimate contact with each other and bonded together in superposition by heating.

The mixture is preferably coated in such thicknesses that the thickness of the intermediate resin layer to be finally obtained is from 1/50 to 1/5 of the thickness of each of the metal sheets to be superposed, ranging from 20 to 150 μm in absolute terms. If the thickness of the intermediate resin layer is less than 20 μm, the vibration-damping and adhesive properties of the intermediate resin layer will possibly deteriorate; if the thickness of the intermediate resin layer exceeds 150 μm, metal sheets can potentially be dislocated or cracked during the subsequent shaping process.

The temperature for bonding the metal sheets in superposition may be such that the mixture is given heat at ca. 130 - 250 °C.

A contact time of ca. 30 sec - 2 min will suffice for bonding with a heated press, and a contact time ca. 1 - 10 sec will suffice for bonding with heated rolls. If desired, the metal sheets may be preliminarily heated to the same temperature as that for bonding and they are then bonded together in superposition by means of a cooling press or cooling rolls.

Another approach that can be taken in certain instances comprises thermally melting the respective ingredients to form a uniform mixture, shaping the mixture into a film, and thermally bonding the film as sandwiched between the two metal sheets.

The choice of a specific process depends on the kinds of the prepolymer and the low-molecular weight compounds and the best selection can be accomplished easily by anyone skilled in the art.

## The second embodiment of the invention

### Prepolymers (C) and (D)

The prepolymers that can be used in the second general embodiment of the present invention and their preferred examples are completely the same as those described in connection with the first general embodiment except for the number of functional groups (X) per molecular chain.

The prepolymer (C) contains an average of at least two, preferably two, functional groups (X) per molecular chain.

The prepolymer (D) contains functional groups (X′) whose number per molecular chain is grater than that of functional groups (X) present in the prepolymer (C). Preferably, the number of functional groups (X′) is greater than that of functional groups (X) by at least 0.5 per molecular chain, with the average number of functional groups (X′) being 2.5 - 4.5.

The functional group (X) may be the same or different from the functional group (X′); however, they are preferably the same from the viewpoint of ease in controlling the reaction.

By using the two prepolymers (C) and (D), the bonding performance at both ordinary and elevated temperatures, the retention of adhesion after exposure to elevated temperatures and the vibration-damping performance over a broad temperature range can be improved compared to the case where the prepolymer (C) is used alone. Compared to the case of using the prepolymer (D) alone, the combined use of the two prepolymers (C) and (D) offers the advantage that the vibration damping performance over a broad temperature range and the spot welding performance in the presence of an incorporated conductive filler are both improved.

To benefit from the advantages described above, the prepolymers (C) and (D) are used in weight proportions of 90/10 to 10/90, with 80/20 - 20/80 being preferred.

### Low-molecular weight compound

The compounds that can be used are completely identical to those described in connection with the first general embodiment of the present invention. It should, however, be noted that a low-molecular weight compound having an average of at least two functional groups (Y) per molecule will suffice for the purposes of the present invention and there is no need to use two low-molecular weight compound as in the first general embodiment.

As in the first embodiment, the proportion of the low-molecular weight compound to the prepolymers may be determined in terms of the number of functional groups (Y) as relative to the sum of the numbers of the functional groups (X) and (X′).

The most preferred combination of the three components is such that a polyester having an average of two hydroxyl groups per molecular chain is used as prepolymer (C), that a polyester having an average of 2.5 - 4.5 hydroxyl groups per molecular chain is used as prepolymer (D), and that an isocyanate compound containing an average of 2 - 9 isocyanato groups is used as the low-molecular weight compound.

As regards the metal sheets, the type of the electroconductive filler, its preferred content and the procedures of manufacturing the composite vibration-damping material, the description made in connection with the first embodiment will hold unaltered.

## The third embodiment of the invention

The metal sheets and the prepolymers to be used in the third general embodiment of the present invention, as well as their preferred examples may be completely the same as those described in connection with the first embodiment.

As regards the low-molecular weight compound that can be used, the description made in connection with the first embodiment will hold unaltered except that a compound having at least two functional groups (Y) per molecule will suffice for the purposes of the present invention. Needless to say, two low-molecular weight compounds may be used but this is not the sole case of the present embodiment.

The discussion made in connection with the first embodiment will also apply to the relative proportions of the prepolymers and the low-molecular weight compound.

The most preferred combination of the three components is such that a polyester having an average of two hydroxyl groups per molecular chain is used as each prepolymer and that an isocyanate compound containing an average of 3 - 9 isocyanato groups per molecular is used as the low-molecular weight compound.

In this embodiment, the first prepolymer is mixed with the low-molecular weight compound which will react with said first prepolymer, and the mixture is coated on the surface of at least one of two metal sheets. The first prepolymer can be mixed with the low-molecular weight compound by dissolving them in a solvent. The resulting solution is applied in such an amount that the composite vibration-damping material to be finally obtained will have a desired thickness of intermediate resin layer. Usually, the coating solution is applied in such an amount as to give a thickness of 10 - 100 μm after the removal of the solvent.

After the application of the coating solution and with the solvent being removed or yet to be removed, the second prepolymer is dusted over the coated surface of a metal sheet. This second prepolymer needs only to contain functional groups (X′) which will react with the low-molecular weight compound; it may be of the same or different kind from the first prepolymer with which the surface of at least one metal sheet has been coated.

The second prepolymer is dusted usually in an amount of 5 - 70 wt%, preferably 10 - 50 wt%, of the sum of the first (coated) and the second (dusted) prepolymers. The second prepolymer may be dusted either in a solid form or as a solution. In the former case, the prepolymer may take on any form such as a powder, granules, flakes, pellets or fibers. When dusting the second prepoplymer, care must be taken to prevent it from mixing uniformly with the first (coated) prepolymer. If the two prepolymers are mixed uniformly, it sometimes occurs that the objects of the present invention cannot be attained.

In the next step, the two metal sheets are superposed in such a way that the coating of the first prepolymer is held therebetween and they are then bonded together thermally, thereby producing the composite vibration-damping material of the present invention.

The temperature for heating the two metal sheets in superposition will vary not only with the kinds of the prepolymers used but also with the kind of the low-molecular weight compound which reacts with those prepolymers. Take, for example, the case where hydroxyl group containing polyesters (i.e., prepolymers) are combined with an isocyanate compound (i.e., low-molecular weight compound); the assembly may be heated at a temperature of 130 - 200°C.

The pressure to be applied for bonding the metal sheets together is in the range of 2 - 30 $kg/cm^2G$.

In the first to the third general embodiments of the present invention described above, the progress of the reaction between the prepolymers having functional groups and the low-molecular weight compounds also having functional groups will vary with the kinds of those functional groups. Take, for example, the case where a polyester having hydroxyl groups is combined with an isocyanate compound having isocyanato groups. As soon as these components are dissolved in a solvent, the reaction will start and is substantially completed by the thermal compression of the metal sheets, whereupon a crosslinked resin is produced.

The time and temperature for a sequence of operations including the preparation of coating solutions, their application onto an metal sheet, the removal of the solvent and the compression of the two metal sheets should be selected as appropriate in accordance with the kinds of functional groups present in the prepolymers and the low-molecular weight compounds. Those conditions can be determined optimally by one skilled in the art on an empirical basis.

In accordance with the first to the third general embodiments of the present invention described hereinabove, composite vibration-damping materials can be obtained that will exhibit satisfactory damping performance over a broad temperature range and the reason for this effect is speculated as follows.

If a sort or flexible resin having low crosslink density is used as the sole component of the resin layer, the resulting composite vibration-damping material will exhibit high damping performance at near-ordinary or low temperatures as indicated by dashed line a in the graph of Fig.1. On the other hand, if a resin having high crosslink density is used as the sole component of resin layer, the resulting composite vibration-damping material will exhibit high damping performance at high temperatures as indicated by dashed line b in Fig. 1. In contrast, the composite vibration-damping material of present invention has both the area of high crosslink density and the area of low crosslink density distributed in the resin layer and, as a result, the damping performance at near-ordinary temperatures is exhibited by the flexible area of low crosslink density whereas the damping performance at high temperatures is exhibited by the area of high crosslink density. This would be the reason why the vibration-damping material of the present invention exhibits satisfactory damping performance over a broad temperature range as indicated by the solid line in Fig.1.

The composite vibration-damping materials produced by the processes of the present invention are applicable not only to stair-steps, doors and floors but also to automobile's oil pan, as well as the dash panel, floor panel and roof panel around the body where it has been difficult to use conventional composite vibration-damping materials. Such improved composite vibration-damping materials are also applicable to covers on motors and compressors. In short, those materials find potential use in a broad scope of applications including, for

example, civil engineering, construction field, automotive industry and electric industry.

The following examples are provided for the purpose of further illustrating the present invention but are in no way to be taken as limiting.

## Examples

In the following examples, resin compositions were interposed between two metal sheets and samples of composite vibration-damping material were prepared under predetermined conditions (see below). These samples were subjected to the following test for evaluating their performance and for testing the physical properties of the resins.

(1) Damping performance

As an index of damping performance, the loss factor $\eta$ of each sample was measured by a mechanical impedance method and the temperature dependency of loss factor at 1000 Hz was investigated. The samples with $\eta$ of 0.1 and higher were rated to have satisfactory damping performance.

(2) Bonding performance

(i) T-peel strength: Each sample as slit to a width of 25 mm was subjected to measurement at a tensile speed of 200 mm/min and at room temperature (23°C) in accordance with JIS K-6854.

(ii) Shear adhesion strength: Each sample as slit to have a bonding area of 25 mm x 12.5 mm was subjected to measurement at a tensile speed of 10 mm/min and at room temperature (23°C) in accordance with JIS K-6850.

(3) Heat-resisting bonding performance:

Each sample worked as in (2)(ii) was subjected to measurement at a tensile speed of 10 mm/min and at a temperature of 10 - 80°C in accordance with JIS K-6850.

(4) Adaptability for shaping process

Each sample as slit to a size of 25 mm wide by 100 mm long was bent to 4mm$\phi$ and the results were evaluated by the criteria of X (lifting occurred in the bend) and O (no change occurred).

(5) Retention of bonding performance after high-temperature treatment

Each sample as slit to have bonding area of 25 mm x 12.5 mm was put in an oven and baked in air at 200°C for 1 h. After the baking, the shear adhesion strength of the sample was measured at room temperature (23°C) as in (2)(ii). The result was evaluated by the percent retention of adhesion strength which was calculated by the following formula:

$$\frac{\text{[shear adhesion strength after baking]}}{\text{[shear adhesion strength before baking]}} \times 100(\%)$$

(6) Spot welding performance

Two pieces of each sample that had been slit to a size of 100 mm wide by 160 mm long were superposed on each other and subjected to direct spot welding at a pressure of 200 kg with a current of 8 kA applied through 8 cycles at consecutive spots 20 mm apart using dome-shaped electrodes of 8 R. Samples that formed nuggets of normal diameter were rated to be "successful". With two pieces of sample placed in superposition, welding was conducted at 40 spots and the success rate was expressed as a percentage.

(7) Glass transition temperature

The glass transition temperature of each resin composition was measured with a differential scanning calorimeter (DSC) and indicated in terms of the temperatures at which the absorption of heat due to glass transition started and ended when temperature was elevated in a nitrogen atmosphere at a rate of 10°C/min. In

the following description, the temperature at which the differential value on the DSC heat absorption curve was at a minimum is meant whenever the term "glass transition temperature" is simply used.

(8) Number average molecular weight

Number average molecular weight of each thermoplastic resin was measured by liquid chromatography of its solution in tetrahydrofuran and calculated in terms of polystyrene.

Example 1

The following prepolymers were provided.

Prepolymer A

Polyester as synthesized by a conventional method that was composed of terephthalic acid, sebacic acid, ethylene glycol and neopentyl glycol residues in the molar ratio of 45:55:45:55 (number av. mol. wt.: 15,000; glass transition temperature: -15°C; number of crosslinkable functional groups (OH groups): 2/molecular chain).

Prepolymer B

Two polyesters as synthesized by a conventional method from the constituent materials of prepolymer A plus trimethylolpropane or pentaerythritol (number av. mol. wt: 20,000; glass transition temperature : -10°C; number of crosslinkable functional groups (OH groups): 3 or 4 on average per molecular chain).

Prepolymers A and B were each dissolved in a mixed solvent of toluene and methyl ethyl ketone to form a prepolymer solution having a solids content of 25 wt%.

The resulting two solutions were mixed and freed of the solvent, producing a miscible mixture (causing no phase separation larger than 1 μmϕ).

The following isocyanate compounds were also used.

Isocyanate compound A

Carbodiimide modified diisocyanate (trade name, Millionate NTL-C available from Nippon Polyurethane Industry Co., Ltd.:

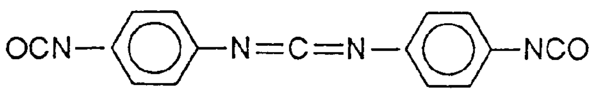 )

This isocyanate compound contained ca. 30 wt% of a triisocyanate compound and it had a number average molecular weight of 340, with an average of 2.3 isocyanato groups being present per molecule.

Isocyanate compound B

Polymerized triisocyanate (trade name, Collonate 2030 available from Nippon Polyurethane Industry Co., Ltd.; solids content, 50%; solvent, butyl acetate). This isocyanate compound contained ca. 30 wt% of a compound having at least 4 isocyanato groups per molecule and it had a number average molecular weight of 2150, with an average of 6.2 isocyanato groups being present per molecule.

The solutions of prepolymers A and B were mixed in the weight proportions indicated in Table 1 and further mixed with an equivalent amount of the isocyanate compound A or B, thereby preparing a mixed solution of the prepolymers and isocyanate compound.

To the mixed solution thus prepared, a nickel filler (average particle size, 65 μm) was added as a conductive material in such an amount that it would finally account for 3 vol% of the intermediate resin layer.

The thus obtained mixture (in solution) was roll coated on two cold-rolled and degreased steel sheets (SPCC-SD) having a thickness of 0.8mm and the steel sheets were then heated in an oven (100°C in air for 3 min) to remove the solvent. Immediately thereafter, the coated surfaces oi the two steel sheets were brought into contact with each other and thermally bonded in superposition with a hot press (180°C x 2 min x 5kgf/cm$^2$) to prepare various sample of composite vibration-damping material.

Table 1-1

| Run | | Invention 1-1 | Comparison 1-1 | Comparison 1-2 | Invention 1-2 | Comparison 1-3 |
|---|---|---|---|---|---|---|
| Prepolymer A | No. of OH groups per molecular chain | 2 | | | | |
| | Relative content *1 | 50 | 100 | 0 | 60 | 0 |
| Prepolymer B | Average No. of OH groups per molecular chain | 3 | | | 4 | |
| | Relative content *1 | 50 | 0 | 100 | 40 | 100 |
| Isocyanate compound A | Average No. of isocyanato groups per molecule | 2.3 | | | | |
| | Relative content (NCO/OH molar ratio) | 1.0 | | | | |

* 1: Weight ratio of the solids content of prepolymer

Table 1-2

| Run | | Invention 1-3 | Comparison 1-4 | Comparison 1-5 |
|---|---|---|---|---|
| Prepolymer A | No. of OH groups per molecular chain | 2 | | |
| | Relative content *1 | 70 | 100 | 0 |
| Prepolymer B | Average No. of OH groups per molecular chain | 3 | | |
| | Relative content *1 | 30 | 0 | 100 |
| Isocyanate compound B | Average No. of isocyanato groups per molecule | 6.2 | | |
| | Relative content (NCO/OH molar ratio) | 1.0 | | |

* 1: Weight ratio of the solids content of prepolymer

Table 2-1

| Run | | Invention 1-1 | Comparison 1-1 | Comparison 1-2 | Invention 1-2 | Comparison 1-3 |
|---|---|---|---|---|---|---|
| Glass transition temperature of the resin in intermediate layer (°C) *1 | | -13, -8 [-19 to 6] | -14 [-19 to -3] | -7 [-12 to 8] | -12, -4 [-18 to 12] | -3 [-9 to 15] |
| Resin thickness (μm) | | 50 | | | | |
| Bonding perfomance | T-peel strength (kgf/25 mm) | 17 | 6 | 22 | 18 | 25 |
| | Shear adhesion strength ($kgf/cm^2$) | 122 | 42 | 130 | 123 | 141 |
| Heat-resisting bonding performance ($kgf/cm^2$) | 40°C | 90 | 21 | 95 | 93 | 98 |
| | 60°C | 47 | 5 | 49 | 48 | 53 |
| | 80°C | 30 | 0 | 34 | 32 | 37 |
| Adaptability for shaping process | | o | x | o | o | o |
| Retention (%) of adhesion strength after high-temperature treatment | | 100 | 20 | 100 | 100 | 100 |
| Vibration damping performance (at 1000 Hz) | $\eta$ max | 0.48 | 0.52 | 0.38 | 0.47 | 0.30 |
| | Temperature for $\eta$ max (°C) | 23 | 16 | 40 | 22 | 44 |
| | Temperature range and difference (°C) for $\eta \geq 0.1$ | 11 - 81 [70] | 4 - 43 [39] | 32 - 84 [52] | 2 - 83 [81] | 37 - 90 [53] |
| Success rate of spot welding (%) | | 90 | 100 | 20 | 90 | 5 |

*1: Temperature at which the differential value on DSC absorption curve due to glass transition was at a minimum, with the heat absorption start and end points being parenthesized.

Table 2-2

| Run | | Invention 1-3 | Comparison 1-4 | Comparison 1-5 |
|---|---|---|---|---|
| Glass transition temperature of the resin in intermediate layer (°C) *1 | | -11, -5 [-19 to 9] | -13 [-19 to -3] | -1 [-9 to 11] |
| Resin thickness (µm) | | 50 | | |
| Bonding perfomance | T-peel strength (kgf/25 mm) | 18 | 16 | 22 |
| | Shear adhesion strength ($kgf/cm^2$) | 127 | 110 | 153 |
| Heat-resisting bonding performance ($kgf/cm^2$) | 40°C | 98 | 96 | 99 |
| | 60°C | 53 | 50 | 55 |
| | 80°C | 37 | 35 | 40 |
| Adaptability for shaping process | | o | o | o |
| Retention (%) of adhesion strength after high-temperature treatment | | 100 | 100 | 100 |
| Vibration damping performance (at 1000 Hz) | $\eta$ max | 0.45 | 0.46 | 0.30 |
| | Temperature for $\eta$ max (°C) | 30 | 20 | 45 |
| | Temperature range and difference (°C) for $\eta \geq 0.1$ | 8 - 84 [76] | 4 - 53 [47] | 35 - 88 [53] |

*1: Temperature at which the differential value on DSC absorption curve due to glass transition was at a minimum, with the heat absorption start and end points being parenthesized.

Example 2

The following prepolymer was used.

Prepolymer C

Polyester as synthesized by a conventional method that was composed of terephthalic acid, adipic acid, ethylene glycol and 1,6-hexanediol residues in the molar ration of 60:40:60:40 (number av. mol. wt.: 10,000; glass transition temperature: -15°C; number of functional groups (OH groups): 2/molecular chain).

This prepolymer C was dissolved in a -mixed solvent of toluene and methyl ethyl ketone to form a prepolymer solution having a solids content of 25 wt%.

The resulting prepolymer solution was mixed with isocyanate compounds A and B in the proportions indicated in Table 3 to prepare mixed solutions of the prepolymer and isocyanate compounds. The two isocyanate compounds A and B were added in such an amount that the sum of isocyanato groups would be an equivalent amount with respect to the hydroxyl groups at both ends of the molecular chain of prepolymer C.

Each of the mixed solutions was roll-coated on two cold-rolled and degreased steel sheets (SPCC-SD). Thereafter, a nickel filler (average particle size, 65 µm) was dusted over the coated surfaces in such an amount

that it would finally account for 3 vol% of the intermediate resin layer. The steel sheets were then heated in an oven (100°C in air for 3 min) to remove the solvent. Immediately thereafter, the coated surfaces of the two steel sheets were brought into contact with each other and thermally bonded together in superposition with a hot press (180°C x 2 min x 5 $kgf/cm^2$) to prepare various samples of composite vibration-damping material.

The samples were evaluated for their performance and the results are shown in Table 4. The relationship between heat-resisting bonding property, spot weldability and the relative content of isocyanate compound B in the samples is shown graphically in Fig. 2.

Table 3

| Run | | Invention 2-1 | Invention 2-2 | Invention 2-3 | Comparison 2-1 | Comparison 2-2 | Comparison 2-3 | Comparison 2-4 |
|---|---|---|---|---|---|---|---|---|
| Isocyanate compound A | Average No. of isocyanato groups per molecule | 2.3 | | | | | | |
| | Relative content *1 | 40 | 60 | 80 | 0 | 10 | 90 | 100 |
| Isocyanate compound B | Average No. of isocyanato groups per molecule | 6.2 | | | | | | |
| | Relative content *1 | 60 | 40 | 20 | 100 | 90 | 10 | 0 |
| Prepolymer C | No. of OH groups per molecule chain | 2 | | | | | | |
| | Relative content (NCO/OH molar ratio) | 1.0 | | | | | | |

* 1: Molar percent of isocyanato groups

Table 4

| Run | | Invention 2-1 | Invention 2-2 | Invention 2-3 | Comparison 2-1 | Comparison 2-2 | Comparison 2-3 | Comparison 2-4 |
|---|---|---|---|---|---|---|---|---|
| Glass transition temperature of the resin in intermediate layer (°C) *1 | | -13 [-19 to 6] | -13 [-20 to 4] | -14 [-20 to 5] | -10 [-17 to 13] | -12 [-19 to 11] | -14 [-20 to 5] | -14 [-20 to 5] |
| Resin thickness (μm) | | 50 | | | | | | |
| Bonding perfomance | T-peel strength (kgf/25 mm) | 17 | 16 | 15 | 18 | 17 | 11 | 10 |
| | Shear adhesion strength ($kgf/cm^2$) | 127 | 123 | 115 | 130 | 128 | 100 | 90 |
| Heat-resisting bonding performance ($kgf/cm^2$) | 40°C | 91 | 78 | 55 | 96 | 95 | 31 | 22 |
| | 60°C | 40 | 28 | 9 | 50 | 48 | 0 | 0 |
| | 80°C | 24 | 20 | 2 | 28 | 27 | 0 | 0 |
| Adaptability for shaping process | | o | o | o | o | o | o | x |
| Retention (%) of adhesion strength after high-temperature treatment | | 100 | 100 | 95 | 100 | 100 | 80 | 60 |
| Vibration damping performance (at 1000 Hz) | η max | 0.46 | 0.48 | 0.52 | 0.42 | 0.44 | 0.53 | 0.54 |
| | Temperature for η max (°C) | 20 | 18 | 17 | 28 | 24 | 16 | 15 |
| | Temperature range and difference (°C) for η≥0.1 | 6 - 70 [64] | 4 - 68 [64] | 3 - 65 [62] | 17 - 72 [55] | 11 - 70 [59] | 2 - 60 [58] | 0 - 56 [56] |
| Success rate of spot welding (%) | | 80 | 100 | 100 | 60 | 70 | 100 | 100 |

*1: Temperature at which the differential value on DSC absorption curve due to glass transition was at a minimum, with the heat absorption start and end points being parenthesized.

Example 3

The following prepolymers were used.

Prepolymer D

Polyester as synthesized by a conventional method that was composed of terephthalic acid, sebacic acid ethylene glycol and of 1,6-hexanediol residues in the molar ratio of 60:40:60:40 (number av. mol. wt.: 15,000; glass transition temperature: -18°C; number of functional groups (OH groups): 2/molecular chain).

Prepolymer E

Polyester as synthesized by a conventional method that was composed of terephthalic acid, isophthalic acid, ethylene glycol, 1,6-hexanediol and polyethylene glycol (number av. mol. wt.: 1000) residues in the molar ratio of 75:25:40:50:10 (number av. mol. wt.: 20,000; glass transition temperature: 10°C; number of functional groups (OH groups): 2/molecular chain).

Prepolymer D was dissolved in a mixed solvent of toluene and methyl ethyl ketone to prepare a prepolymer solution having a solids content of 25 wt%. On the other hand, prepolymer E was processed into a powder comprising particles with an average size of 50 μm.

The isocyanate compound used in Example 3 was the same as the isocyanate compound B used in Example 1.

The solution of preopolymer D was mixed with isocyanate compound B to prepare a mixed solution. To the mixed solution thus prepared, a nickel filler (average particle size, 65μm) was added as a conductive material in such an amount that it would finally account for 3 vol% of the intermediate resin layer.

The thus obtained mixture (in solution) was roll coated on two cold-rolled and degreased steel sheets (SPCC-SD) having a thickness of 0.8 mm and the steel sheets were then heated in an oven (100°C in air for 3 min) to remove the solvent. Immediately thereafter, the powder of prepolymer E was dusted over the coated surfaces of the two steel sheets, which were then brought into contact with each other and thermally bonded together in superposition with a hot press (180°C x 2 min x 5 kgf/$cm^2$) to prepare various samples of composite vibration-damping material.

Comparative sample 3-1 was prepared without dusting the powder of prepolymer E; comparative sample 3-2 was prepared without dusting the powder of prepolymer E but using prepolymer E in place of prepolymer D; comparative sample 3-3 was the same as comparative sample 3-2 except that isocyanate compound B was not added; and invention sample 3-2 was prepared with the powder of prepolymer being dusted before the solvent was distilled off (see Table 5).

Those samples were subjected to various performance tests and the results are shown in Table 6.

Table 5

| Run | | Invention 3-1 | Comparison 3-1 | Comparison 3-2 | Comparison 3-3 | Invention 3-2 |
|---|---|---|---|---|---|---|
| Prepolymer D | No. of OH groups per molecular chain | 2 | | | | |
| | Relative content *1 | 70 | 100 | 0 | 0 | 70 |
| Prepolymer E | No. of OH groups per molecular chain | 2 | | | | |
| | Relative content *1 | 30 | 0 | 100 | 100 | 30 |
| Isocyanate compound B | Average No. of isocyanato groups per molecule | 6.2 | | | | |
| | Relative content (NCO/OH molar ratio) | 1.0 | 1.0 | 1.0 | 0 | 1.0 |

* 1: Weight ratio of the solids content of prepolymer

Table 6

| Run | | Invention 3-1 | Comparison 3-1 | Comparison 3-2 | Comparison 3-3 | Invention 3-2 |
|---|---|---|---|---|---|---|
| Glass transition temperature of the resin in intermediate layer (°C) *1 | | -13.7 [-23 to 23] | -16 [-25 to 0] | 12 [4 to 28] | 10 [2 to 27] | -14.5 [-25 to 23] |
| Resin thickness (μm) | | 50 | | | | |
| Bonding perfomance | T-peel strength (kgf/25 mm) | 15 | 15 | 23 | 10 | 17 |
| | Shear adhesion strength ($kgf/cm^2$) | 113 | 108 | 162 | 122 | 118 |
| Heat-resisting bonding performance ($kgf/cm^2$) | 40°C | 82 | 78 | 102 | 28 | 86 |
| | 60°C | 34 | 30 | 42 | 5 | 38 |
| | 80°C | 23 | 19 | 25 | 0 | 25 |
| Adaptability for shaping process | | o | o | o | o | o |
| Retention (%) of adhesion strength after high-temperature treatment | | 100 | 100 | 100 | 40 | 100 |
| Vibration damping performance (at 1000 Hz) | η max | 0.53 | 0.46 | 0.47 | 0.56 | 0.51 |
| | Temperature for η max (°C) | 36 | 18 | 58 | 56 | 36 |
| | Temperature range and difference (°C) for η≥0.1 | 4 - 84 [80] | 0 - 51 [51] | 45 - 93 [48] | 39 - 90 [51] | 4 - 82 [78] |
| Success rate of spot welding (%) | | 100 | 60 | 50 | 100 | 95 |

*1: Temperature at which the differential value on DSC absorption curve due to glass transition was at a minimum, with the heat absorption start and end points being parenthesized.

The composite vibration-damping materials produced by the processes of the present invention have the following advantages. First, they exhibit satisfactory damping performance over a broad range of temperatures. Second, they develop sufficient adhesive force at ordinary temperatures to withstand press forming and they exhibit satisfactory bonding properties over the working temperature range; furthermore, they retain the developed adhesive force even after they have been subjected to the step of baking paints. Third, they can be provided with good spot weldability by incorporation of an electroconductive filler.

Hence, the vibration-damping materials produced by the processes of the present invention can advantageously be used in various fields including the automotive applications where spot weldability is required.

## Claims

1. A process for producing a composite vibration-damping material having a resin layer sandwiched between two metal sheets, which process comprises handling a resin in such a way that it is sandwiched between the two metal sheets, said resin being obtained by reacting a prepolymer, a low-molecular weight compound (A) and another low-molecular weight compound (B) under such a condition that the low-molecular weight compound (A) is present in an amount of 15 - 85wt% of the sum of the low-molecular weight compounds (A) and (B), said prepolymer having an average of at least two functional groups (X) per molecular chain, said low-molecular weight compound (A) having an average of at least two functional groups (Y) per molecule that are capable of reacting with the functional groups (X) to form covalent bonds, said low-molecular weight compound (B) having functional groups (Y′) that are capable of reacting with the functional groups (X) to form covalent bonds and whose number per molecule is greater than that of the functional groups (Y) in the low-molecular weight compound (A).

2. A process according to claim 1 wherein the prepolymer is a saturated polyester.

3. A process according to claim 1 wherein the prepolymer has a number average molecular weight of 7,000 - 50,000.

4. A process according to claim 1 wherein each of the low-molecular weight compounds (A) and (B) is an isocyanate compound.

5. A process according to claim 1 wherein the low-molecular weight compound (A) is an isocyanate compound containing averagely 2 -2.5 isocyanato groups per molecule and the low-molecular weight compound (B) is an isocyanate compound containing averagely 3 -9 isocyanato groups per molecule.

6. A process according to claim 1 wherein an electroconductive filler is mixed with the resin.

7. A process according to claim 1 wherein a solution containing the prepolymer, the low-molecular weight compounds (A) and (B) and, optionally, an electroconductive filler is coated on at least one surface of the two metal sheets, removing the solvent, compressing the two metal sheets together in such a way that they sandwich the coated surface, and heating the assembly.

8. A process for producing a composite vibration-damping material having a resin layer sandwiched between two metal sheets, which process comprises handling a resin in such a way that it is sandwiched between the two metal sheets, said resin being obtained by reacting a prepolymer (C), a prepolymer (D) and a low-molecular weight compound under such 5a condition that the prepolymer (C) is present in an amount of 10 - 90 wt% of the sum of the prepolymers (C) and (D), said prepolymer (C) having an average of at least of two functional groups (X) per molecular chain, said prepolymer (D) containing functional groups (X′) whose number per molecule is greater than that of the functional groups (X) in the prepolymer (C), said low-molecular weight compound having at least two functional groups (Y) per molecule that are capable of reacting with the functional groups (X) and (X′) to form covalent bonds.

9. A process according to claim 8 wherein each of the prepolymers (C) and (D) is a saturated polyester.

10. A process according to claim 8 wherein each of the prepolymers (C) and (D) has a number average molecular weight of 7,000 - 50,000.

11. A process according to claim 8 wherein the low-molecular weight compound is an isocyanate compound.

12. A process according to claim 8 wherein the prepolymer (C) contains averagely two functional groups (X) per molecular chain and the prepolymer (D) contains averagely 2.5 - 4.5 functional groups (X′) per molecular chain.

13. A process according to claim 8 wherein an electroconductive filler is mixed with the resin.

14. A process according to claim 8 wherein a solution containing the prepolymers (C) and (D), the low-molecular weight compound and, optionally, an electroconductive filler is coated on at least one surface of the two metal sheets, removing the solvent, compressing the two metal sheets together in such a way that they sandwich the coated surface, and heating the assembly.

15. A process for producing a composite vibration-damping material having a resin layer sandwiched between two metal sheets, which process comprises mixing a first prepolymer having an average of at least two functional groups (X) per molecular chain with a low-molecular weight compound having at least two functional groups (Y) per molecule that are capable of reacting with the functional groups (X) to form covalent bonds, coating the resulting mixture on at least on surface of the two metal sheets, dusting said coated surface with a second prepolymer having an average of at least two functional groups (X′) per molecular chain that are capable of reacting with the functional groups (Y) to form covalent bonds, and compressing the two metal sheets together in such a way that they sandwich the coated surface.

16. A process according to claim 15 wherein the prepolymer is a polyester.

17. A process according to claim 15 wherein the prepolymer has a number average molecular weight of 7,000 - 50,000.

18. A process according to claim 15 wherein the low-molecular weight compound is an isocyanate compound.

19. A process according to claim 15 wherein the low-molecular weight compound is an isocyanate compound containing averagely 3 - 9 isocyanato groups per molecule.

20. A process according to claim 15 wherein the mixture of the first prepolymer and the low-molecular weight compound is further mixed with an electroconductive filler.

21. A process according to claim 15 wherein the mixture of the first prepolymer and the low-molecular weight compound is in solution.

22. A process according to claim 15 wherein the second prepolymer to be dusted is in a solid form.

23. A composite vibration-damping material as produced by the process of claim 1.

24. A composite vibration-damping material as produced by the process of claim 8.

25. A composite vibration-damping material as produced by the process of claim 15.

26. A composite vibration-damping material having a resin sandwiched between two metal sheets, said resin being obtained by reacting a prepolymer, a low-molecular weight compound (A) and another low-molecular weight compound (B) under such a condition that the low-molecular weight compound (A) is present in an amount of 15 - 85wt% of the sum of the low-molecular weight compounds (A) and (B), said prepolymer having an average of at least of two functional groups (X) per molecular chain, said low-molecular weight compound (A) having an average of at least two functional groups (Y) per molecule that are capable of reacting with the functional groups (X) to form covalent bonds, said low-molecular weight compound (B) having functional groups (Y′) that are capable of reacting with the functional groups (X) to form covalent bonds and whose number per molecule is greater than that of the functional groups (Y) in the low-molecular weight compound (A).

27. A composite vibration-damping material having a resin sandwiched between two metal sheets, said resin being obtained by reacting a prepolymer (C), a prepolymer (D) and a low-molecular weight compound under such a condition that the prepolymer (C) is present in an amount of 10 - 90 wt% of the sum of the prepolymers (C) and (D), said prepolymer (C) having an average of at least two functional groups (X) per molecular chain, said prepolymer (D) containing functional groups (X′) whose number per molecule is greater than that of 5 the functional groups (X) in the prepolymer (C), said low- molecular weight compound having an average of at least two functional groups (Y) per molecule that are capable of reacting with the functional groups (X) and (X′) to form covalent bonds.

FIG. 1

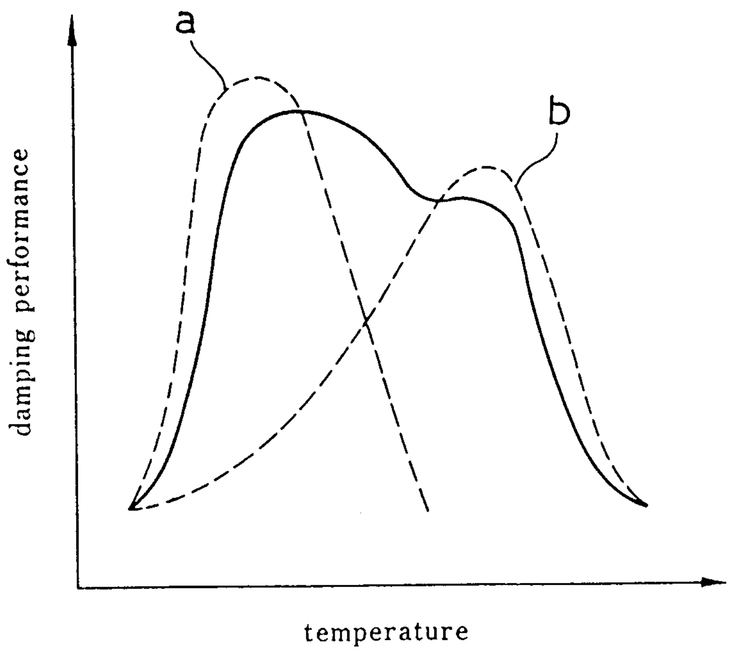
a
b
damping performance
temperature

FIG. 2

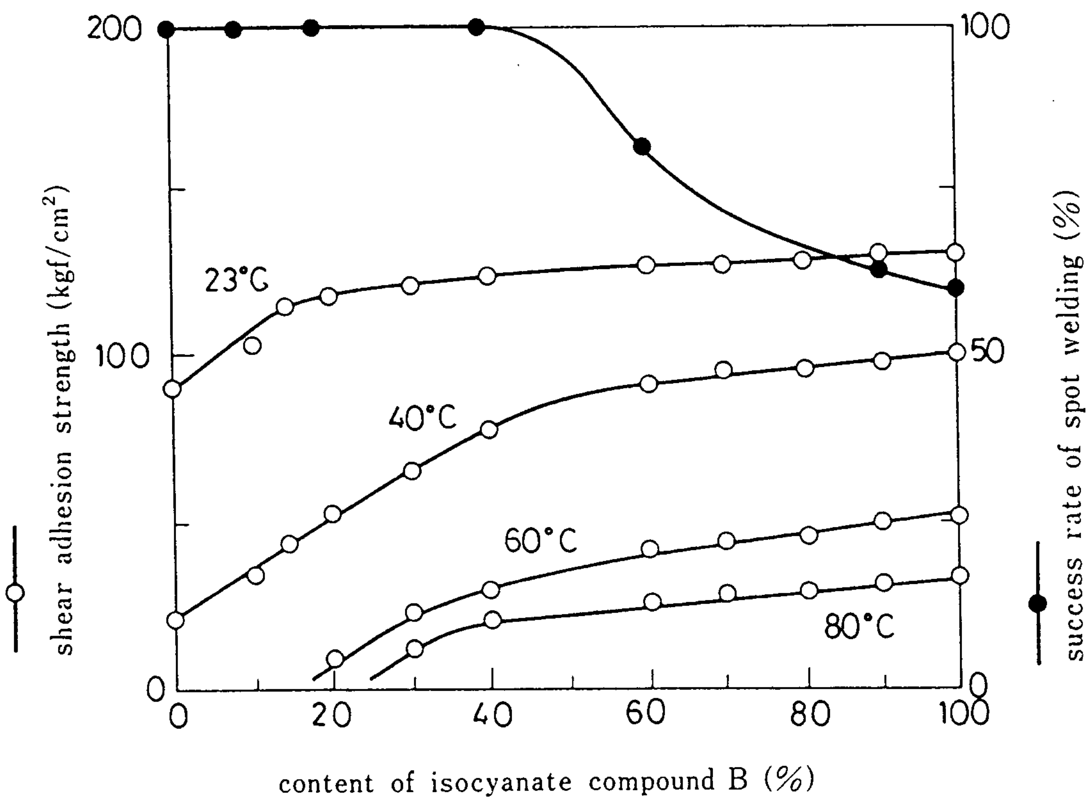
200
100
0
100
50
0
0
20
40
60
80
100
23°C
40°C
60°C
80°C
shear adhesion strength (kgf/cm²)
success rate of spot welding (%)
content of isocyanate compound B (%)